# EUROPÄISCHE PATENTSCHRIFT

(11) **EP 0 289 693 B1**
(45) Veröffentlichungstag und Bekanntmachung des Hinweises auf die Patenterteilung: **18.08.1993**
(21) Anmeldenummer: 87890090.1
(22) Anmeldetag: 07.05.1987
(51) Int. Cl.: G03B 17/10

(54) **Wechselobjektiv für eine Laufbild-Filmkamera**
Interchangeable lens for a film camera
Objectif interchangeable pour caméra de cinéma

(43) Veröffentlichungstag der Anmeldung: 09.11.1988
(73) Patentinhaber: ARNOLD & RICHTER CINE TECHNIK GMBH & CO. BETRIEBS KG., D-80799 München (DE)
(72) Erfinder: Blaschek, Otto, Dornach (DE)
(74) Vertreter: Ninnemann, Detlef, Dipl.-Ing.

(56) Entgegenhaltungen:
- EP-A- 0 144 933
- DE-A- 3 538 827
- GB-A- 2 086 071

## Beschreibung

Die Erfindung betrifft ein Wechselobjektiv für eine Laufbild-Filmkamera mit einem Bajonett- oder Gewindering zur lösbaren Befestigung an derselben.

Es ist bereits gemäß DE-B 1 236 329 ein Wechselobjektiv dieser Art bekannt, bei dem zu dem Objektiv eine Schallschutzhaube vorgesehen ist, welche das Objektiv umschließt und die vom Kamerawerk ausgehenden störenden Geräusche nicht nach außen dringen lassen soll. Dadurch, daß zusätzlich zum Wechselobjektiv eine Schallschutzhaube für dieses vorhanden ist, ergibt sich ein sperriger Aufbau. Ferner wird die Handhabung beim Wechseln des Objektivs erschwert, da stets zwei Befestigungen, nämlich die des Wechselobjektivs mit Fassung an der Kamera, wie auch die der Objektiv-Schallschutzhülle vorgenommen werden müssen. Außerdem muß die Bauform und Größe der Schallschutzhaube jeweils der Bauform und Größe des gerade im Einsatz befindlichen Objektivs angepaßt werden.

Die EP-A-0 144 933 zeigt einen zwischen Innen- und Außenfassung eines Objektivs in einer Nut angeordneten federnden Ring, welcher der Geräuschdämmung dienen soll.

Die GB-A 2 086 071 zeigt eine Objektivfassung, welche mit dem Kamerarahmen über eine aus vibrationsdämpfendem Material bestehende Zwischenschicht verbunden ist.

Die Aufgabe der Erfindung liegt nun in der Schaffung eines Wechselobjektivs der eingangs beschriebenen Art, das ohne Beeinträchtigung eines raschen Wechselvorganges eine verbesserte Schalldämmung aufweist.

Diese Aufgabe wird erfindungsgemäß gelöst durch die Merkmale des Patentanspruches 1.

Durch die erfindungsgemäße Ausführung liegt somit ein in seinen Funktionen in keiner Weise beeinträchtigtes Wechselobjektiv mit optimalen Schalldämpfungseigenschaften vor.

Eine weitere bevorzugte Ausführungsform der Erfindung besteht darin, daß der vom Kameragehäuse abgewandte Endbereich der Hülse mit einem eine kegelstumpfförmige Mantelfläche aufweisenden Reflexschutz verbunden ist, dessen sich verjüngender, an die Objektivkapsel angrenzender Endbereich mit einer senkrecht zur Objektivachse verlaufenden Planglasscheibe verbunden ist. Mit einem derartigen, an der Schallschutzhülle befestigten Reflexschutz ist auch im, vom Kameragehäuse abgewandten Endbereich der Außenfassung und der Objektivkapsel eine weitestgehende Schalldämmung möglich. Diesbezüglich ist auch von besonderem Vorteil, daß zwischen der schallgedämpften Außenfassung samt Reflexschutz einerseits und der nicht schallgedämpften Objektivkapsel andererseits keine Berührung vorliegt.

Eine zusätzliche Geräuschdämpfung in der besonders kritisch zu bewertenden Aufnahmerichtung kann erreicht werden, wenn in Weiterbildung der Erfindung so vorgegangen wird, daß die Planglasscheibe unter Vermittlung eines ringförmigen schallabsorbierenden Dämpfungselements in den Reflexschutz eingesetzt ist und/oder daß der Reflexschutz an seinem objektivfrontseitigen Ende mit einem sich vorzugsweise über seine gesamte radiale Breite erstreckenden, ringförmigen schallabsorbierenden Dämpfungselement ausgebildet ist.

Entsprechend einer anderen vorteilhaften Variante der Erfindung ist vorgesehen, daß die als Blendenmitnahmering ausgebildete Blendenmitnahmevorrichtung mit zwei diametral gegenüberliegenden, parallel zur Objektivachse verlaufenden Trägerelementen mit jeweils einer ringförmigen Öffnung zur Aufnahme des Dämpfungselementes verbunden ist. Durch diese Ausbildung ist mit einem Minimum an schallbestrahlter Masse eine ausreichende mechanische Drehverbindung zwischen Mitnehmerstiften bzw. Blendenskalenringen und Blendenmitnahmevorrichtung möglich.

Der mit dem Schärfenskalenring verbundene Mitnahmestift kann gemäß einer weiteren bevorzugten Ausführungsvariante der Erfindung auch mit seinem radialen inneren Ende in einer schlitzförmigen, sich in Objektivlängsrichtung erstreckenden Öffnung des mit der Schärfeneinstellvorrichtung verbundenen Dämpfungselementes angeordnet sein. Durch eine derartige, sich in Objektivlängsrichtung erstreckende Öffnung ist bei einem Kontakt zwischen Mitnehmerstift und Dämpfungselement für eine spielfreie Übertragung der Drehbewegung eine unbehinderte Relativverschiebung der Objektivkapsel in deren Achslängsrichtung für die Schärfeneinstellung möglich.

Das mit dem Objektivträger verbundene Kamerawerk kann auch einen zur Kamerainnenseite hin versetzten radial verlaufenden Steg aufweisen, wobei zwischen diesem Steg und einer mit dem Kameragehäuse verbindbaren Platte ein schallabsorbierendes Dämpfungselement aus elastischem Material angeordnet ist und wobei das Dämpfungselement vorzugsweise durch Schraubverbindungen mit dem Steg verbunden ist. Auf diese vorteilhafte Art wird eine Übertragung der Schallwellen vom Schall bestrahlten, gehäuseinnenseitig gelegenen Steg auf die Gehäuseaußenseite zuverlässig und wirkungsvoll gedämpft. Dabei bildet das Kamerawerk mit dem Wechselobjektiv in bekannter Weise eine starre Einheit zur Herstellung einer raschen und festen Verbindung. Da das Kamerawerk selbst lediglich unter Zwischenschaltung eines Dämpfungselementes mit dem Kameragehäuse verbunden ist, wird trotz einer festen Verbindung jedwede Schallübertragung unterbunden. Dabei ist von besonderem Vorteil, daß der schallbestrahlte Steg des Kamerawerkes im Inneren des Kameragehäuses zu liegen kommt, sodaß auch eine Weiterleitung des Schalls durch den Steg an die Gehäuseaußenseite zuverlässig ausgeschlossen ist.

Im folgenden wird die Erfindung an Hand von in der Zeichnung dargestellten Ausführungsbeispielen näher beschrieben.

Es zeigen:
Fig. 1 eine Seitenansicht des erfindungsgemäß ausgebildeten Wechselobjektivs mit einem Teil eines Kameragehäuses,
Fig. 2a einen Längsschnitt durch das Wechselobjektiv entlang der Objektivachse,
Fig. 2b einen Ansicht des Kameragehäuses ohne Wechselobjektiv
Fig. 3 eine Draufsicht auf das erfindungsgemäß ausgebildete Wechselobjektiv ohne Hülse.

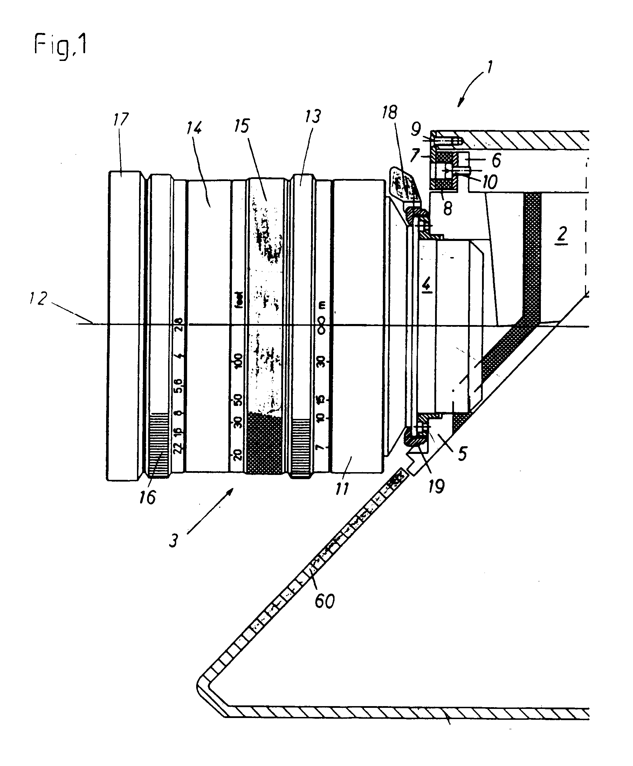

Eine in Fig. 1 nur zum Teil ersichtliche Laufbild-Filmkamera 1 besteht aus einem Kameragehäuse 2 und einem Wechselobjektiv 3. Dieses ist mit Hilfe eines am Objektiv befestigten Bajonettringes 4 lösbar mit einem an einem Kamerawerk 2 befestigten Objektivträger 5 verbunden. Das Kamerawerk 2 weist an seiner Ober- und seinen beiden vertikalen Seiten einen in Richtung zum Kameragehäuse 60 hin versetzen Steg 6 auf. Die Verbindung des Kamerawerks 2 mit dem Kameragehäuse 60 erfolgt derart, daß zwischen einer Trägerplatte 7 und dem Steg 6 ein Dämpfungselement 8 aus schallabsorbierendem Material, wie z.B. Gummi angeordnet ist.

Die Trägerplatte 7 ist über Schraubverbindungen 9 lösbar am Kameragehäuse 60 befestigt. Das Dämpfungselement 8 ist über Schraubverbindungen 10 mit dem Steg 6 des Kamerawerks 2 verbunden, es könnte mit diesem aber auch verklebt sein. Eine derartige Befestigung des Kamerawerkes 2 am Kameragehäuse 60 ist ähnlich jener durch die DE-A 3 041 161 bekannten Befestigung. Diese hat allerdings den Nachteil, daß durch die Verbindungsplatte eine dämpfungsfreie Weiterleitung des Schalls an die Außenseite der Kamera vorliegt.

Das Wechselobjektiv 3 weist an seiner Außenseite einen an den Indexring 11 anschließenden, um die Objektivachse 12 drehbar gelagerten Schärfenskalenring 13 mit entsprechenden Entfernungsmarkierungen auf. Zwischen diesem Schärfenskalenring 13 und einem weiterem Indexring 14 ist ein Griffring 15 vorgesehen, mit dem das Wechselobjektiv 3 beim Auswechselvorgang gehalten wird. Ein dem Indexring 14 zugeordneter Blendenskalenring 16 ist über nachfolgend noch näher zu beschreibende Einrichtungen mit der Blende verbunden und um die Objektivlängsachse drehbar gelagert. Im freien Endbereich des Wechselobjektivs 3 befindet sich schließlich ein Fronttubus 17. Zur Befestigung des Wechselobjektivs 3 ist noch ein Bajonettring 19 mit Griff 18 auf der Kameraseite vorgesehen.

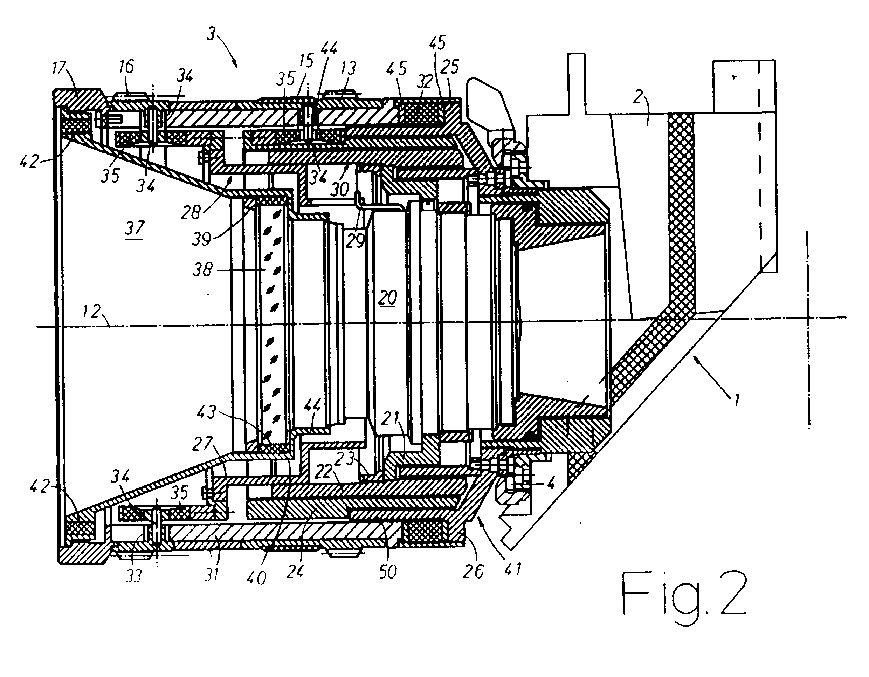

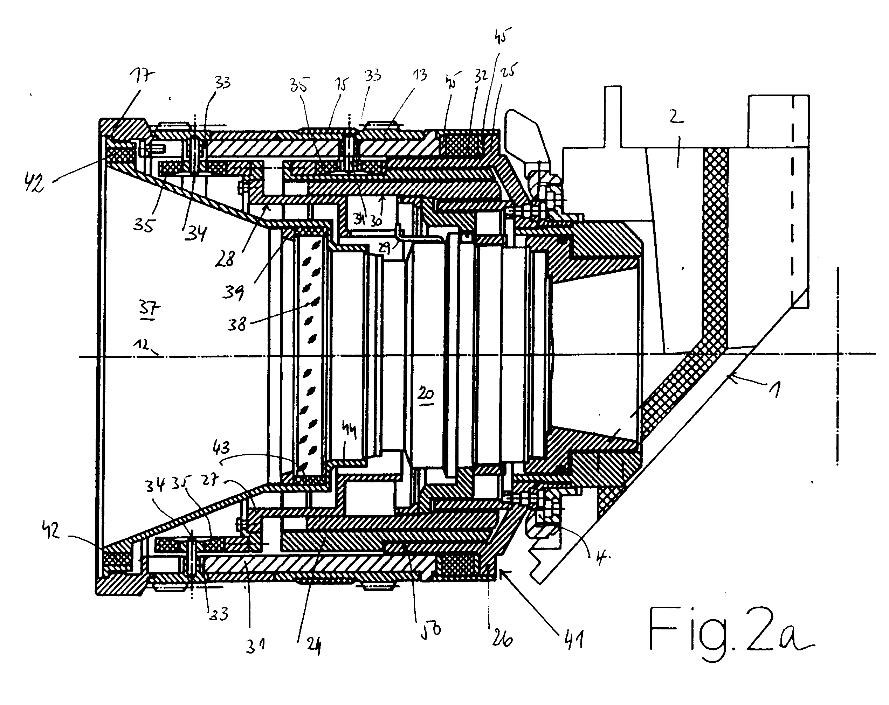

Wie Fig. 2a im einzelnen zeigt, besteht das Wechselobjektiv 3 aus einer in Vorderansicht dargestellten Objektivkapsel 20 und der diese fassenden - im Querschnitt dargestellten und nachstehend im Detail erläuterten - Außenfassung 41 samt Blendenmitnahme- und Schärfeneinstellvorrichtung sowie Befestigungseinrichtung. Die Objektivkapsel 20 wird von einem sowohl an seiner Außen- als auch Innenseite ein Gewinde aufweisenden Zentrierring 21 gehalten, der seinerseits in einem ersten Gewindering 22 mit Hilfe eines Vorschraubringes 23 fixiert ist. Mit dem an der Außenseite dieses ersten Gewinderinges 22 befindlichen Gewinde steht ein weiterer, zweiter Gewindering 24 in Eingriff. Dieser steht wiederum über ein Gewinde mit einem Flansch 25 in Verbindung. Dieser zweite, eine Schärfeneinstellvorrichtung 30 bildende Gewindering 24 gewährleistet, daß es bei einer Drehung des Gewinderinges 24 um die Achse 12 zu einer Längsverschiebung der Objektivkapsel 20 und damit zu der gewünschten Schärfeneinstellung kommt. Der einen radial verlaufenden Steg 26 aufweisende Flansch 25 ist mit dem objektivseitigen Bajonettring 4 verbunden. Im dem Kameragehäuse 60 abgewandten Endbereich des inneren, ersten Gewinderinges 22 ist ein Blendenmitnahmering 27 vorgesehen, der zum genannten Gewindering 22 längsverschiebbar ist. Dieser eine Blendenmitnahmevorrichtung 28 bildende Blendenmitnahmering 27 kontaktiert einen Blendenhebel 29 zur Verstellung einer nicht dargestellten Blende in der Objektivkapsel 20.

Das Wechselobjektiv 3 ist von einer zylinderförmigen Hülse 31 umschlossen, die in ihrem gehäuseseitigen Stirnendbereich mit einer Seite eines Dämpfungsringes 32 aus elastischem, körperschallabsorbierendem Material, insbesondere Gummi, verbunden ist. Die an den Flansch 25 angrenzenden Flächen des Dämpfungsringes 32 sind mit diesem entweder direkt oder unter Vermittlung von vorzugsweise mit dem Ring 32 festen Metallauflagen 45 fest verbunden. Dadurch werden die vom Kamerawerk verursachten Geräusche weitestgehend gedämpft, sodaß für die Aufnahmemikrofone keine störenden Nebengeräusche auftreten. Dabei verhindert der Dämpfungsring 32 eine Fortpflanzung der Schallwellen vom Kamerawerk über den Flansch 25 zur Hülse 31. Diese weist tangential verlaufende schlitzförmige Öffnungen 33 auf, durch die jeweils ein radial verlaufender Mitnehmerstift 34 hindurchgeführt ist. Einer dieser Mitnehmerstifte 34 ist mit seinem radial äußeren Ende mit dem Schärfenskalenring 13 verbunden und mit seinem radial inneren Ende in einem plättchenförmigen Dämpfungselement 35 aus einem elastischen, schallabsorbierenden Material, wie z.B. Gummi angeordnet. Dieses ist wiederum in einer entsprechenden Ausnehmung des zweiten Gewinderringes 24 befestigt. Die Mitnehmerstifte 34 sind diametral gegenüberliegend mit dem Blendenskalenring 16 verbunden. Die radial inneren Enden dieser Mitnehmerstifte 34 sind jeweils in einem weiteren Dämpfungselement 35 gleichfalls aus einem elastischen, schallabsorbierenden Material, wie z.B. aus Gummi eingebettet. Zur Übertragung der aus dem Blendenskalenring 16 einwirkenden Drehmomente sind die Dämpfungselemente 35 über einen Klemmring 36 mit dem Blendenmitnahmering 27 verbunden.

Der mit dem stirnseitigen Endbereich der Schallschutzhülle 31 verbundene Fronttubus 17 steht über ein Gewinde mit einem eine kegelstumpfförmige Mantelfläche aufweisenden Reflexschutz 37 in Verbindung. Zu diesem, an den Fronttubus 17 angrenzenden Bereich des Reflexschutzes 37 ist ein radial durchgehendes, ringförmiges Dämpfungselement 42 eingesetzt. Der Reflexschutz 17 weist in seinem verjüngten, dem Ende der Objektivkapsel 20 gegenüberligenden Bereich eine senkrecht zur Achse 12 verlaufende Planglasscheibe 38 auf, die unter Verwendung eines weiteren ringförmigen Dämpfungselementes 43 in den Reflexschutz 37 eingesetzt ist. Mit Hilfe eines Vorschraubringes 39 wird die Planglasscheibe 38 gegen eine Abstufung 40 des Reflexschutzes 37 gedrückt. Durch die aus einem elastischen, schallabsorbierenden Material, wie z.B. Gummi bestehenden Dämpfungselemente 42,43 kann eine zusätzliche Geräuschdämpfung in der besonders kritisch zu bewertenden Aufnahmerichtung erreicht werden. Der Reflexschutz 37 weist zwischen der Planglasscheibe 38 und der Objektivkapsel 20 ein zylinderförmiges Endstück 40 auf, dessen Durchmesser geringfügig größer als der Durchmesser der angrenzenden Objektivkapsel 20 ausgebildet ist.

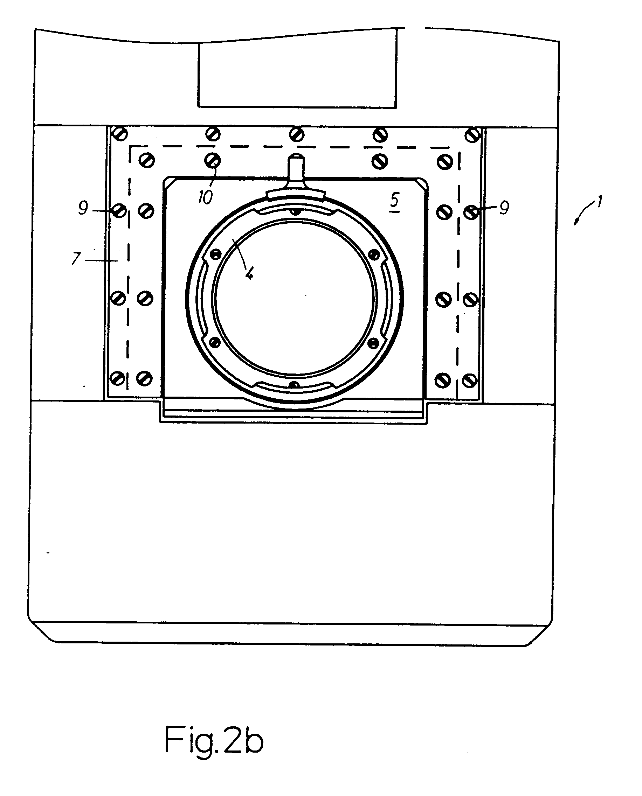

In Fig. 2b ist in Draufsicht auf die Filmkamera in Richtung der Objektivachse mit abmontiertem Wechselobjektiv die Trägerplatte 7 ersichtlich, die durch Schraubverbindungen 9 mit dem Kameragehäuse 60 verbunden ist. Mit den Schraubverbindungen 10 ist das hinter der Trägerplatte 7 befindliche Dämpfungselement 8 am Steg 6 des Kamerawerks 2 befestigt.

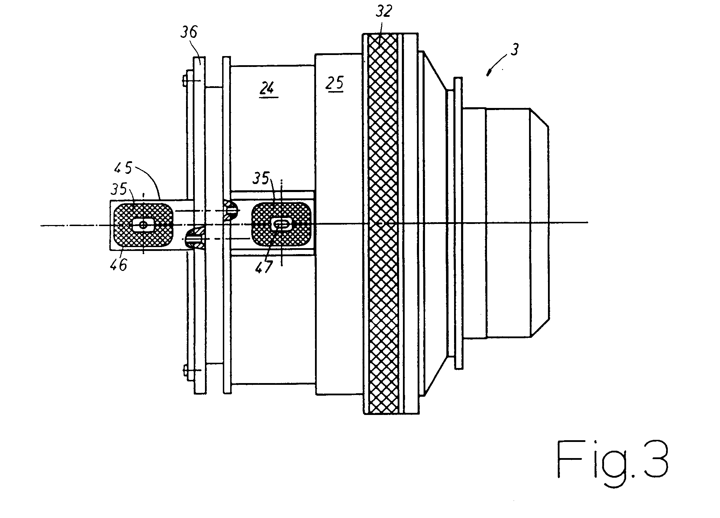

In Fig. 3 sind die einerseits mit dem Gewindering 24 und andererseits mit dem Blendenmitnahmering 27 verbundenen Dämpfungselemente 35 ersichtlich. Das vordere Dämpfungselement 35 ist auf einem Trägerelement 45 befestigt, das eine ringförmige Öffnung 46 zur Aufnahme des Dämpfungselementes 35 aufweist. Das andere Dämpfungselement 35 weist eine sich in Objektivlängsrichtung erstreckende Öffnung 47 auf, in der der zugeordnete Mitnehmerstift längsverschiebbar ist.

## Patentansprüche

1. Wechselobjektiv für eine Laufbild-Filmkamera mit einem Bajonett- oder Gewindering zur losbaren Befestigung an derselben, einer als Schallschutzhülle ausgebildeten Außenfassung (41), die im wesentlichen aus einem Fronttubus (17), einer von verstellbaren Skalenringen (13,16) umfaßten Hülse (31) und einem Flansch (25) zum Anschluß an die Filmkamera besteht, einem zwischen dem mit dem Bajonett- oder Gewindering (4) verbundenen Flansch (25) und der Hülse (31) angeordneten, aus elastischem schallabsorbierendem Material bestehenden Dämpfungsring (32), mit die Hülse (31) durchdringenden, mit einem Schärfenskalenring (13) bzw. einem Blendenskalenring (16) verbundenen Mitnehmerstiften (34), die wenigstens an ihren radialen inneren Enden von einem elastischen, schallabsorbierenden Dämpfungselement (35) umgeben sind, das einerseits an der dem Blendenskalenring zugeordneten Blendenmitnahmevorrichtung (28) und anderseits an der dem Schärfenskalenring zugeordneten Schärfeneinstellvorrichtung (30) befestigt ist, wobei die Blendenmitnahmevorrichtung (28) und die Schärfeneinstellvorrichtung (30) eine Objektivkapsel (20) umfassen, die ihrerseits direkt an die Laufbild-Filmkamera gekoppelt ist.

2. Wechselobjektiv nach Anspruch 1, dadurch gekennzeichnet, daß der vom Kameragehäuse (60) abgewandte Endbereich der Hülse (31) mit einem eine kegelstumpfförmige Mantelfläche aufweisenden Reflexschutz (37) verbunden ist, dessen sich verjüngender, an die Objektivkapsel (20) angrenzender Endbereich mit einer senkrecht zur Objektivachse (12) verlaufenden Planglasscheibe (38) verbunden ist.

3. Wechselobjektiv nach einem der Ansprüche 1 oder 2, dadurch gekennzeichnet, daß die Planglasscheibe (38) unter Vermittlung eines ringförmigen, schallabsorbierenden Dämpfungselementes (43) in den Reflexschutz (37) eingesetzt ist und/oder daß der Reflexschutz (37) an seinem objektivfrontseitigem Ende mit einem sich vorzugsweise über seine gesamte radiale Breite erstreckenden, ringförmigen, schallabsorbierenden Dämpfungselement (42) ausgebildet ist.

4. Wechselobjektiv nach einem der Ansprüche 1 bis 3, dadurch gekennzeichnet, daß die als Blendenmitnahmering (27) ausbildete Blendenmitnahmevorrichtung (28) mit zwei diamentral gegenüberliegenden, parallel zur Objektivachse verlaufenden Trägerelementen (45) mit jeweils einer ringförmigen Öffnung (46) zur Aufnahme des Dämpfungselementes (35) verbunden ist.

5. Wechselobjektiv nach einem der Ansprüche 1 bis 4, dadurch gekennzeichnet, daß der mit dem Schärfenskalenring (13) verbundene Mitnahmestift (34) mit seinem radialen inneren Ende in einer schlitzförmigen, sich in Objektivlängsrichtung erstreckenden Öffnung (47) des mit der Schärfeneinstellvorrichtung (30) verbundenen, schallabsorbierenden Dämpfungselementes (35) angeordnet ist.

6. Wechselobjektiv nach einem der Ansprüche 1 bis 5, dadurch gekennzeichnet, daß das mit dem Objektivträger (5) verbundene Kamerawerk (2) einen zur Kamerainnenseite hin versetzten, radial verlaufenden Steg (6) aufweist, und daß zwischen diesem Steg (6) und einer mit dem Kameragehäuse (60) verbindbaren Platte (7) ein schallabsorbierendes Dämpfungselement (8) aus elastischem Material angeordnet ist, wobei das Dämpfungselement (8) vorzugsweise durch Schraubverbindungen (10) mit dem Steg (6) verbunden ist.

## Claims

1. Interchangeable lens for a movie film camera with a bayonet or threaded ring for detachable fixing on same, an external socket (41) designed as a sound protection sleeve consisting substantially of a front tube (17), a sleeve (31) enclosed by adjustable scale rings (13.16) and a flange (25) for attachment on the film camera, a damping ring (32) made of an elastic sound-absorbing material and mounted between the flange (25) connected to the bayonet or threaded ring (4) and the sleeve (31), with entrainment pins (34) passing through the sleeve (31) and connected to a focusing scale ring (13) or aperture scale ring (16) wherein the pins are enclosed at least at their radially inner ends by an elastic sound-absorbing damping element (35) which is fixed on one side on the aperture entrainment device (28) associated with the aperture scale ring and on the other side to the focus adjustment device (30) associated with the focusing scale ring, wherein the aperture entrainment device (28) and the focus adjustment device (30) enclose a lens capsule (20) which in turn is coupled directly to the movie film camera.

2. Interchangeable lens according to claim 1 characterised in that the end area of the sleeve (31) remote from the camera housing (60) is connected to a reflex protector (37) having a frusto-conical sleeve face and whose tapering end area adjoining the lens capsule (20) is connected to a flat glass disc (38) running at right angles to the lens axis (12).

3. Interchangeable lens according to one of claims 1 or 2 characterised in that the flat glass disc (38) is inserted in the reflex protector (37) by means of a ring-shaped sound-absorbing damping element (43) and/or that the reflex protector (37) is formed at its end on the side of the lens front with a ring-like sound-absorbing damping element (42) extending preferably over its entire radial width.

4. Interchangeable lens according to one of claims 1 to 3 characterised in that the aperture entrainment device (28) designed as an aperture entrainment ring (27) is connected with two diametrally opposite support elements (45) running parallel to the lens axis each with a ring-like opening (46) for holding the damping element (35).

5. Interchangeable lens according to one of claims 1 to 4 characterised in that the entrainment pin (34) which is connected to the focusing scale ring (13) is mounted with its radially inner end in a slit-like opening (47) extending in the longitudinal direction of the lens in the sound-absorbing damping element (35) connected to the focus adjustment device (30).

6. Interchangeable lens according to one of claims 1 to 5 characterised in that the camera mechanism (20) connected to the lens support (5) has a radially aligned web (6) off-set towards the inside of the camera, and that between this web (6) and a plate (7) connectable with the camera housing (60) there is a sound-absorbing damping element (8) made of elastic material wherein the damping element (8) is preferably connected by screw connections (10) to the web (6).

## Revendications

1. Objectif interchangeable pour une caméra de cinéma à images avec une bague à baïonnette ou à filetage pour la fixation amovible sur celle-ci, une monture extérieure (41) sous forme d'une gaine de protection acoustique, qui est constituée essentiellement d'un tube frontal (17) , d'une gaine (31) entourée par des bagues graduées réglables (13, 16) et d'un flasque (25) pour le raccordement à la caméra de cinéma, une bague d'amortissement (32) en matériau élastique absorbant le bruit disposée entre le flasque (25) assemblé à la bague à baïonnette ou à filetage (4) et la gaine (31), avec des broches d'entraînement (34) traversant la gaine (31) assemblée à une bague graduée de netteté (13) et à une bague graduée de diaphragme (16) qui sont entourées, au moins à leurs extrémités intérieures radiales, par un élément d'amortissement élastique absorbant le bruit (35) qui est fixé, d'une part, au dispositif d'entraînement de diaphragme (28) correspondant à la bague graduée de diaphragme et, d'autre part, au dispositif de réglage de netteté (30) correspondant à la bague graduée de netteté, tandis que le dispositif d'entraînement de diaphragme (28) et le dispositif de réglage de netteté (30) entourent un capuchon d'objectif (20) qui est accouplé lui-même directement à la caméra de cinéma à images.

2. Objectif interchangeable selon la revendication 1, caractérisé en ce que la zone terminale opposée au boîtier de caméra (60) de la douille (31) est assemblée à une protection reflex (37) présentant une surface périphérique tronconique dont la zone terminale rétrécie avoisinant le capuchon d'objectif (20) est assemblée à un disque de verre plat (38) disposé perpendiculairement à l'axe de l'objectif (12).

3. Objectif interchangeable selon l'une des revendications 1 ou 2, caractérisé en ce que le disque de verre plat (38) est inséré dans la protection reflex (37) par l'intermédiaire d'un élément d'amortissement annulaire absorbant le bruit (43) et/ou en ce que la protection reflex (37) présente, à son extrémité du côté de l'avant de l'objectif, un élément d'amortissement (42) annulaire absorbant le bruit et s'étendant, de préférence, sur toute sa largeur radiale.

4. Objectif interchangeable selon l'une des revendications 1 à 3, caractérisé en ce que le dispositif d'entraînement de diaphragme (28) constitué d'une bague d'entraînement de diaphragme (27) est assemblé à deux éléments de support (45) diamétralement opposés et disposés parallèlement à l'axe de l'objectif, avec chacun un orifice annulaire (46) destiné à recevoir l'élément d'amortissement (35).

5. Objectif interchangeable selon l'une des revendications 1 à 4, caractérisé en ce que la broche d'entraînement (34) assemblée à la bague graduée de netteté (13) est disposée avec son extrémité intérieure radiale dans un orifice (47) en forme de fente s'étendant dans la direction longitudinale de l'objectif de l'élément d'amortissement (35) absorbant le bruit et assemblé au dispositif de réglage de netteté (30).

6. Objectif interchangeable selon l'une des revendications 1 à 5, caractérisé en ce que le mécanisme de caméra (2) assemblé au support d'objectif (5) présente une traverse (6) disposée radialement et décalée vers le côté intérieur de la caméra et que, entre cette traverse (6) et une plaque (7) pouvant être assemblée au boîtier de caméra (60), se trouve un élément d'amortissement absorbant le bruit (8) en matériau élastique tandis que l'élément d'amortissement (8) est assemblé à la traverse (6), de préférence par des assemblages à vis (10).
